(19) Europäisches Patentamt
European Patent Office
Office européen des brevets

(11) Veröffentlichungsnummer: **0 226 243 B1**

# EUROPÄISCHE PATENTSCHRIFT

(45) Veröffentlichungstag der Patentschrift: **26.06.91**

(51) Int. Cl.⁵: **B23B 27/16**

(21) Anmeldenummer: **86202073.2**

(22) Anmeldetag: **24.11.86**

(54) **Schneidwerkzeug.**

(30) Priorität: **16.12.85 AT 3612/85**

(43) Veröffentlichungstag der Anmeldung:
**24.06.87 Patentblatt 87/26**

(45) Bekanntmachung des Hinweises auf die
Patenterteilung:
**26.06.91 Patentblatt 91/26**

(84) Benannte Vertragsstaaten:
**BE CH DE ES FR GB IT LI NL SE**

(56) Entgegenhaltungen:
**EP-A- 0 052 585**
**FR-A- 2 232 386**
**FR-A- 2 311 621**
**FR-A- 2 466 298**

(73) Patentinhaber: **PLANSEE TIZIT GESELL-
SCHAFT M.B.H.**

**A-6600 Reutte/Tirol(AT)**

(72) Erfinder: **Maier, Johann**
**Innerwand 11**
**A-6600 Pflach(AT)**
Erfinder: **Wallinger, Günter**
**Mittenwaldbahnstrasse 16**
**A-6600 Breitenwang(AT)**

(74) Vertreter: **Lohnert, Wolfgang, Dr.**
**Metallwerk Plansee GmbH**
**A-6600 Reutte, Tirol(AT)**

**Beschreibung**

Die Erfindung betrifft ein Schneidwerkzeug mit einem Werkzeugschaft, einer Wendeschneidplatte mit Mittelloch und einem Klemmsystem zur Klemmung von Wendeschneidplatten mit Mittelloch, bei dem die Wendeschneidplatte über eine seitliche Anlagefläche gegen einen in das Mittelloch eingreifenden im Werkzeugschaft verankerten, feststehenden Bolzen gepreßt wird, wobei die in Richtung Bolzenlängsachse gesehene Projektionsfläche des Bolzens vom kleinsten Inkreis des Mittellochs der Wendeschneidplatte umschrieben wird.

Ein derartiges Klemmsystem ist beispielsweise in der DE-AS 1 477 848 beschrieben. In diesem Fall wird eine Mittelloch-Wendeschneidplatte mit einem zylindrischen Mittelloch über eine Seitenfläche mittels einer Keilplatte gegen einen im Werkzeugschaft feststehend verankerten Bolzen gepreßt. Der in das Mittelloch der Wendeschneidplatte eingreifende Kopf des Bolzens ist dabei ebenfalls zylinderförmig ausgebildet. Nachteilig bei dieser Art von Klemmsystem ist, daß positive Wendeschneidplatten nicht geklemmt werden können.

Aus der EP-A 00 52 585 ist ein Schneidwerkzeug mit einem Klemmsystem beschrieben, bei dem eine Mittelloch-Wendeschneidplatte mit trompetenförmigem Mittelloch über einen in das Mittelloch eingreifenden verdrehbaren Exzenterbolzen festgeklemmt wird. Der in bezug auf die Längsachse des Bolzens exzentrisch angeordnete Bolzenkopf weist eine Fläche auf, die zur Längsachse des Bolzens unter einem spitzen Winkel verläuft, die im Klemmzustand die Wendeschneidplatte im Bereich der gekrümmten Wandung des Mittelloches berührt und diese gegen zwei seitliche Anlageflächen des Werkzeugschaftes preßt. Nachteilig bei dieser Art von Klemmsystem ist, daß es nur bei Schneidwerkzeugen eingesetzt werden kann, die zwei seitliche Anlageflächen für die Wendeschneidplatte aufweisen, da nur über die zwei Anlageflächen eine ausreichend genaue Positionierung des Schneideinsatzes erreicht werden kann.

Der Erfindung liegt die Aufgabe zugrunde, ein Schneidwerkzeug mit einem Klemmsystem der eingangs genannten Art dahingehend auszubilden, daß auch positive Wendeschneidplatten bei vergleichsweise geringer Abstützung gegen nur eine Anlagefläche mit ausreichender Sicherheit geklemmt werden können.

Diese Aufgabe wird erfindungsgemäß dadurch gelöst, daß das Mittelloch einen Wandabschnitt aufweist, der eine gekrümmte Rotationsfläche oder kegelförmig ist und der jeweils in einen zylindrischen Wandabschnitt übergeht, daß der Bolzen an seinem in das Mittelloch eingreifenden Ende einen nasenförmigen Vorsprung mit einer unter einem spitzen Winkel zur Bolzenlängsachse geneigten Anlagefläche aufweist, an welcher die festgeklemmte Wendeschneidplatte im Bereich des gekrümmten bzw. geneigten Wandabschnittes des Mittelloches anliegt, daß der Bolzen an seinem in das Mittelloch ragenden Teil an der Umfangsfläche zwei in Längsrichtung verlaufende Ausbuchtungen aufweist, die seiflich symmetrisch zur Symmetrieebene des Bolzens, die durch die Spitze des nasenförmigen Vorsprunges verläuft, angeordnet sind und die derart dimensioniert sind, daß sie bei festgeklemmter Wendeschneidplatte einen Abstand zwischen 0 und 0,2 mm vom zylindrischen Wandabschnitt des Mittelloches aufweisen, wobei gleichzeitig sicherzustellen ist, daß nicht beide Ausbuchtungen am zylindrischen Wandabschnitt anliegen.

Durch die Verwendung von Mittelloch-Wendeschneidplatten, bei denen ein Wandabschnitt des Mittelloches eine gekrümmte Rotationsfläche oder kegelförmig ist und durch die spezielle Form des Mittellochbolzens wird erreicht, daß insbesondere bei positiven Wendeschneidplatten eine ausreichend feste Klemmung erreicht wird, ohne daß die Wendeschneidplatte vom Plattensitz hochsteigen kann. Durch die in Längsrichtung verlaufenden Ausbuchtungen des Bolzens wird beim Einlegen der Wendeschneidplatte eine ausreichende Vorzentrierung gewährleistet und damit eine unzulässige Fehlpositionierung der Wendeschneidplatte beim Festklemmen vermieden.

Erst durch diese speziellen, in Längsrichtung verlaufenden Ausbuchtungen des Bolzens wurde die Übertragung von Wendeschneidplatten, bei denen ein Wandabschnitt des Mittelloches eine gekrümmte Rotationsfläche oder kegelförmig ist, sowie die Übertragung der speziellen Kopfform des Bolzens, die an sich von anderen Klemmsystemen bekannt sind, auf das erfindungsgemäße Klemmsystem mit feststehendem Mittellochbolzen und einer einzigen seitlichen Anlagefläche der Wendeschneidplatte, ermöglicht. Ohne die speziellen, in Längsrichtung verlaufenden Ausbuchtungen des Bolzens wäre die für eine praktische Anwendung erforderliche Positioniergenauigkeit der Wendeschneidplatte nicht ausreichend. Die Ausbuchtungen sind unter Berücksichtigung der möglichen Toleranzen der Wendeschneidplatte so anzuordnen und so zu dimensionieren, daß sie im festgeklemmten Zustand der Wendeschneidplatte einerseits möglichst nahe an den zylindrischen Wandabschnitt des Mittelloches heranreichen, um eine möglichst gute Positionierung der Wendeschneidplatte zu erreichen, daß andererseits aber ein Anliegen beider Ausbuchtungen an diesem Abschnitt des Mittelloches vermieden wird, um dadurch eine Überbestimmung des Klemmsystems zu verhindern, bzw. eine eindeutige Anlage der geneigten Anlagefläche des Bolzenkopfes am gekrümmten bzw. geneigten Wandabschnitt des Mittelloches zu gewährleisten.

Um bei der Klemmung von positiven Wendeschneidplatten ein Aufkippen der Wendeschneidplatte von der Auflagefläche sicher zu verhindern, muß der Winkel der geneigten Anlagefläche des Bolzenkopfes wesentlich größer sein als der Freiwinkel der Wendeschneidplatte. Bei einem Freiwinkel von 7° sollte er etwa zwischen 20° und 30° liegen. Die seitliche Klemmkraft, die die Wendeschneidplatte gegen den Bolzen preßt, sollte darüberhinaus möglichst oberhalb, keinesfalls aber unterhalb des Punktes angreifen, an dem die geneigte Anlagefläche des Bolzen den gekrümmten oder geneigten Wandabschnitt des Mittelloches berührt.

In einer besonders bevorzugten Ausführung sind die in Längsrichtung des Bolzens verlaufenden Ausbuchtungen gegenüberliegend senkrecht zur Symmetrieachse des Bolzens angeordnet und ausschließlich im Bereich des zylindrischen Wandabschnittes des Mittelloches vorgesehen. Auf diese Art und Weise wird ein besonders leichtes Auswechseln und Verdrehen der Wendeschneidplatte im ungeklemmten Zustand erreicht. Dadurch, daß die in Bolzenlängsrichtung gesehene Projektionsfläche des Bolzens kleiner ist als der kleinste Querschnitt des Mittelloches, ist die Wendeschneidplatte im ungeklemmten Zustand gleitend über den Bolzen abnehmbar.

Die Erfindung wird nunmehr an Hand der Zeichnung beschrieben, die eine besonders bevorzugte Ausführungsform der Erfindung wiedergibt.

Es zeigen:

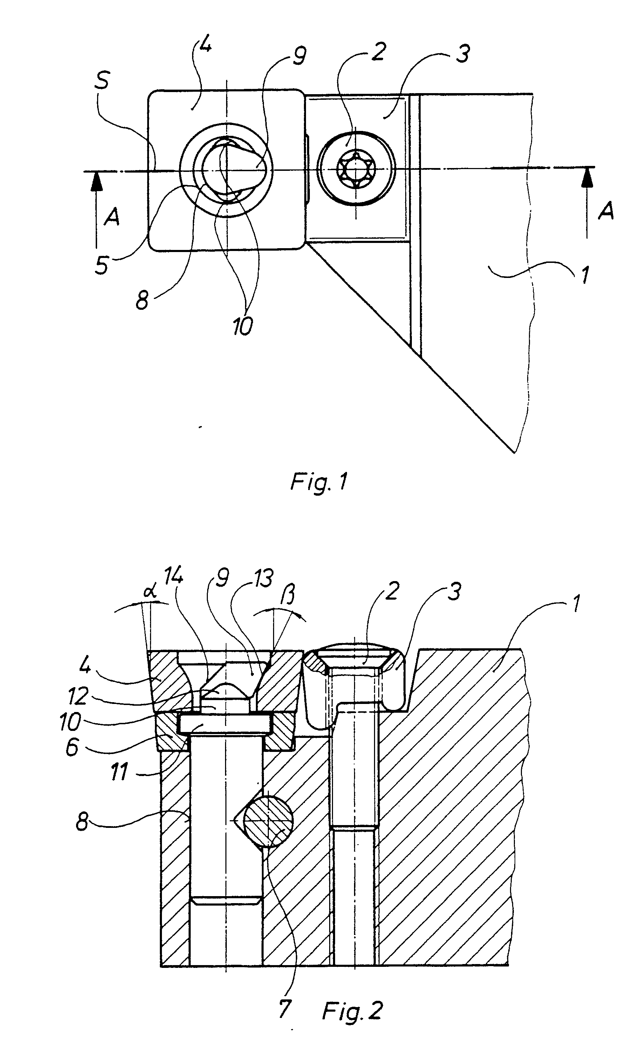

Figur 1    eine Draufsicht auf ein Drehwerkzeug mit dem erfindungsgemäß ausgebildeten Klemmsystem
Figur 2    einen Schnitt nach der Linie A-A der Figur 1

In einer Bohrung des Werkzeugschaftes -1- ist ein Mittellochbolzen -8-eingesetzt. Der Bolzen -8- ist über den Sicherungssplint -7- fest mit dem Werkzeugschaft -1- verbunden. Der Bolzen -8- weist einen Bund -11-auf, mit dem eine Unterlagsplatte -6- auf die Auflagefläche des Werkzeugschaftes -1- gepreßt wird. Auf der Unterlagsplatte -6- ist eine Wendeschneidplatte -4- angeordnet, die ein Mittelloch -5- mit einem Wandabschnitt in Form einer gekrümmten Rotationsfläche und einem daran anschließenden zylindrischen Wandabschnitt aufweist. Der Bolzen -8- weist an seinem in das Mittelloch -5- der Wendeschneidplatte -4- eingreifenden Ende einen nasenförmigen Vorsprung -9- auf. Dieser Vorsprung -9- besitzt eine geneigte Anlagefläche -13-, die in etwa kegelabschnittförmig ist und in einem spitzen Winkel zur Bolzenlängsachse verläuft. Bei festgeklemmter Wendeschneidplatte -4- liegt der gekrümmte Wandabschnitt des Mittelloches an dieser geneigte Anlagefläche -13- an. Des weiteren weist das Ende des Bolzens -8- an seinem, dem nasenförmigen Vorsprung -9- gegenüberliegenden Bereich eine Abkappung -14- auf, die in etwa parallel zur geneigten Fläche -13- verläuft. Auf diese Weise wird das Aufsetzen und Abnehmen der Wendeschneidplatte erleichtert. Der an den nasenförmigen Vorsprung -9-anschließende, bis zum Bund -11- verlaufende Teil des Bolzens -8-, der sich etwa über den Bereich des zylindrischen Wandabschnittes des Mittellochs -5- erstreckt, weist zwei gegenüberliegende Ausbuchtungen -10- auf. Diese Ausbuchtungen -10- sind symmetrisch zur Symmetrieachse -S- des Bolzens, die durch die Spitze des nasenförmigen Vorsprungs -9- verläuft, angeordnet und unter Berücksichtigung der Toleranzen der Wendeschneidplatte -4- so dimensioniert, daß sie bei festgeklemmter Wendeschneidplatte -4- möglichst nahe an den zylindrischen Wandabschnitt des Mittelloches -5- heranreichen, ohne daß jedoch beide Ausbuchtungen -10- gleichzeitig an diesem Wandabschnitt anliegen können. Auf diese Weise wird eine gute Positionierung der Wendeschneidplatte -5- beim Festklemmen erreicht und gleichzeitig eine eindeutige Anlage des gekrümmten Wandabschnittes des Mittelloches -5- der Wendeschneidplatte -4- an der geneigten Anlagefläche -13- des nasenförmigen Vorsprungs -9- des Klemmbolzens -8- gewährleistet. Die Ausbuchtungen -10- gehen über Hohlkehlen -12- in den Endabschnitt des Bolzens -8- über. Auf diese Weise wird eine falsche Positionierung der Wendeschneidplatte -5- durch Aufliegen der Bodenfläche der Wendeschneidplatte auf den vom Bolzenende abgesetzten Ausbuchtungen -10-vermieden. Die Klemmkraft zum Festklemmen der Wendeschneidplatte -4- wird über das Klemmstück -3- aufgebracht. Das Klemmstück -3- ist über eine Klemmschraube -2-, in Richtung auf die Wendeschneidplatte -4- zu, verschiebbar mit dem Werkzeugschaft -1- verbunden. Die Verschiebung des Klemmstückes -3- wird durch die spezielle Ausgestaltung des Klemmstückes -3- und sein Zusammenwirken mit einer schrägen Ablenkfläche am Werkzeugschaft -1- bewirkt.

Die Zeichnungen stellen eine besonders bevorzugte Ausführungsform der Erfindung dar. Die Erfindung ist jedoch keinesfalls auf diese Ausführung beschränkt. So muß die geneigte Anlagefläche -13- des Bolzens -8- nicht die Form eines Kugelabschnittes aufweisen, sondern kann ebenso in etwa die Form eines Kegelabschnittes besitzen. Desgleichen sind die schräg verlaufende Abkappung -14- des Bolzenendes sowie die Hohlkehlen -12- nicht unbedingt erforderlich.

**Ansprüche**

1. Schneidwerkzeug mit einem Werkzeugschaft (1), einer Wendeschneidplatte (4) mit Mittelloch (5) und einem Klemmsystem zur Klemmung der Wendeschneidplatte (4), bei dem die Wendeschneidplatte (4) über eine Anlagefläche (13) gegen einen in das Mittelloch (5) eingreifenden, im Werkzeugschaft (1) verankerten, feststehenden Bolzen (8) gepreßt wird, wobei die in Richtung Bolzenlängsachse gesehene Projektionsfläche des in das Mittelloch (5) eingreifenden Bolzens (8) vom kleinsten Inkreis des Mittellochs (5) der Wendeschneidplatte (4) umschrieben wird, **gekennzeichnet durch** folgende Merkmale:

a) das Mittelloch (5) weist einen Wandabschnitt auf, der eine gekrümmte Rotationsfläche oder kegelförmig ist und der jeweils in einen zylindrischen Wandabschnitt übergeht

b) der Bolzen (8) weist an seinem in das Mittelloch eingreifenden Ende einen nasenförmigen Vorsprung (9) mit einer unter einem spitzen Winkel zur Bolzenlängsachse geneigten Anlagefläche (13) auf, an welcher die festgeklemmte Wendeschneidplatte (4) im Bereich des gekrümmten bzw. geneigten Wandabschnittes des Mittelloches anliegt,

c) der Bolzen (8) weist an seinem in das Mittelloch ragenden Teil an der Umfangsfläche zwei in Längsrichtung verlaufende Ausbuchtungen (10) auf, die seitlich symmetrisch zur Symmetrieebene (S) des Bolzens (8), die durch die Spitze des nasenförmigen Vorsprunges (9) verläuft, angeordnet sind und die derart dimensioniert sind, daß sie bei festgeklemmter Wendeschneidplatte (4) einen Abstand zwischen 0 und 0,2 mm vom zylindrischen Wandabschnitt des Mittelloches aufweisen, wobei gleichzeitig sicherzustellen ist, daß nicht beide Ausbuchtungen am zylindrischen Wandabschnitt anliegen.

2. Schneidwerkzeug nach Anspruch 1, dadurch gekennzeichnet, daß die Ausbuchtungen (10) ausschließlich im Bereich des zylindrischen Wandabschnittes des Mittelloches (5) vorgesehen sind.

3. Schneidwerkzeug nach Anspruch 1 oder 2, dadurch gekennzeichnet, daß die Ausbuchtungen (10) gegenüberliegend senkrecht zur Symmetrieebene (S) des Bolzens (8) angeordnet sind.

## Claims

1. A cutting tool comprising a tool shaft (1), a reversible cutting plate (4) with a central hole (5) and a clamping system for clamping the reversible cutting plate (4), in which the reversible cutting plate (4) is pressed via a bearing surface (13) against a stationary bolt (8), which is anchored in the tool shaft (1) and engages in the central hole (5), the projection surface of the bolt (8) engaging in the central hole (5) being circumscribed by the smallest inscribed circle of the central hole (5) of the reversible cutting plate (4) when viewed in the direction of the longitudinal axis of the bolt (8), characterised by the following features:

a) the central hole (5) comprises a wall section, which is a curved surface of rotation or is cone-shaped and passes in each case into a cylindrical wall section,

b) at its end engaging in the central hole, the bolt (8) comprises a nose-shaped projection (9) having a bearing surface (13) inclined at an acute angle to the longitudinal axis of the bolt, against which surface (13) the clamped reversible cutting plate (4) rests in the region of the curved or inclined wall section of the central hole,

c) in its portion projecting into the central hole, the bolt (8) comprises on its circumferential surface two bulges (10), which extend in the longitudinal direction, are arranged laterally symmetrical to the plane of symmetry (S) of the bolt (8) passing through the point of the nose-shaped projection (9) and are dimensioned in such a manner that, when the reversible cutting plate (4) is clamped, said bulges (10) are arranged at a distance of between 0 and 0.2 mm from the cylindrical wall section of the central hole, it being necessary to ensure at the same time that both bulges do not rest against the cylindrical wall section.

2. A cutting tool according to claim 1, characterised in that the bulges (10) are provided exclusively in the region of the cylindrical wall section of the central hole (5).

3. A cutting tool according to claim 1 or 2, characterised in that the bulges (10) are arranged opposite one another perpendicular to the plane of symmetry (S) of the bolt (8).

## Revendications

1. Outil de coupe comprenant une tige (1) d'outil, une plaquette réversible (4), comportant un trou central (5) et un système de serrage pour serrer la plaquette réversible (4), dans lequel la plaquette réversible (4) est appuyée au moyen d'une surface d'appui (13) contre un boulon fixe (8) ancré dans la tige d'outil (1) et pénétrant dans le trou central (5), la surface de projection du boulon (8) qui traverse le trou central (5), vue dans la direction de l'axe longitudinal du boulon, étant circonscrite par le plus petit cercle intérieur du trou central (5) de la plaque de coupe réversible (4),

caractérisé par les particularités suivantes:

a) le trou central (5) présente une partie de paroi qui est de forme conique ou est une surface de révolution incurvée et qui se raccorde respectivement dans une partie de paroi cylindrique

b) le boulon (8) présente, sur son extrémité pénétrant dans le trou central, une saillie (9) en forme de nez comportant une surface d'appui (13), inclinée vers l'axe longitudinal de boulon selon un angle aigu, sur laquelle la plaquette réversible serrée de façon fixe s'appuie dans la zone de la partie de paroi incurvée ou inclinée du trou central,

c) le boulon (8) présente, sur sa partie en saillie dans le trou central, sur la surface périphérique, deux renflements (10) de tracé parallèle à la direction longitudinale qui sont disposés latéralement de façon symétrique par rapport au plan de symétrie (S) du boulon (8), plan qui passe par la pointe de la saillie (9) en forme de nez, et qui sont dimensionnés de telle manière que, lorsque la plaque de coupe réversible (4) est serrée, ils sont à une distance comprise entre 0 et 0,2 mm de la partie de paroi cylindrique du trou central, étant entendu qu'il doit être en même temps garanti que les renflements ne s'appuient pas tous deux sur la partie de paroi cylindrique.

2. Outil de coupe selon la revendication 1, caractérisé en ce que les renflements (10) sont prévus exclusivement dans la zone de la partie de paroi cylindrique du trou central (5).

3. Outil de coupe selon la revendication 1 ou 2, caractérisé en ce que les renflements (10) sont disposés tournés l'un vers l'autre, perpendiculairement au plan de symétrie (S) du boulon (8).

Fig. 1

7    Fig. 2